# EUROPÄISCHE PATENTANMELDUNG

(11) **EP 3 800 597 A1**
(43) Veröffentlichungstag der Anmeldung: **07.04.2021**
(21) Anmeldenummer: 20199627.9
(22) Anmeldetag: 01.10.2020
(51) Int. Cl.: G06Q 10/08, H04W 4/80, G06Q 10/06, G06Q 50/08

(54) **VERFAHREN ZUR HANDHABUNG EINES INFRASTRUKTURBAUTEILS SOWIE INFRASTRUKTURBAUTEIL MIT TRANSPONDER**

(30) Priorität: 04.10.2019 DE 102019126747
(71) Anmelder: Deutsche Bahn AG, 10785 Berlin (DE)
(72) Erfinder: Elsner, Dirk, 13187 Berlin (DE); Falk, Michael, 01728 Bannewitz (DE); Funk, Stefan, 36217 Ronshausen (DE); Kelm, Agnes, 42327 Wuppertal (DE); Dr. Meins-Becker, Anica, 42781 Haan (DE); Prof. Dr.-Ing. Helmus, Manfred, 58849 Herscheid (DE)

(57) **Zusammenfassung**

Es wird ein Verfahren (20) zur Handhabung eines Infrastrukturbauteils (10) bereitgestellt, bei dem erfindungsgemäß in einem Zuordnungsschritt (22) dem Infrastrukturbauteil (10) ein mit einer Kennung versehener Transponder (12) zugeordnet wird und damit eine Infrastrukturbauteil-Kennung-Kombination erzeugt wird.

## Beschreibung

Die vorliegende Erfindung betrifft ein Verfahren zur Handhabung eines Infrastrukturbauteils sowie ein einen Transponder aufweisendes Infrastrukturbauteil.

Transponder sind im Stand der Technik bekannt. So zeigt beispielsweise die DE 20 2018 107 049 U1 ein automatisches Sicherheits- und Dokumentationssystem für mit RFID-Tags individuell identifizierbar markierte medizinische Instrumente und Produkte.

Der Erfindung liegt die Aufgabe zugrunde, das Auffinden von Infrastrukturbauteilen, die für eine Errichtung eines Infrastrukturbauwerks vorgesehen oder verwendet sind, zu vereinfachen.

Gelöst wird diese Aufgabe mit einem Verfahren nach Anspruch 1 sowie einem Infrastrukturbauteil nach Anspruch 9. Vorteilhafte Weiterbildungen der Erfindung sind in den Unteransprüchen angegeben.

Bei dem erfindungsgemäßen Verfahren zur Handhabung eines Infrastrukturbauteils, wird erfindungsgemäß in einem Zuordnungsschritt dem Infrastrukturbauteil ein mit einer Kennung versehener Transponder zugeordnet. Damit wird eine Infrastrukturbauteil-Kennung-Kombination erzeugt.

Hierdurch ist das Infrastrukturbauteil vorteilhaft auf eine einfache und kostengünstige Weise identifizierbar. Das Infrastrukturbauteil ist bei Bedarf schnell wiederaufzufinden, um beispielsweise etwaige notwendige Arbeiten auszuführen. Besonders gilt dies für die digitale Geburtsurkunde vor allem für sicherheitsrelevante Bauteile, die ein Leben lang aktualisiert werden muss ("Pflichtprüfungen").

In einer vorteilhaften Ausführung des erfindungsgemäßen Verfahrens wird die Infrastrukturbauteil-Kennung-Kombination in einer Datenbank hinterlegt. Insbesondere wird die Infrastrukturbauteil-Kennung-Kombination in der Datenbank mit zumindest einer zugeordneten Information verknüpft.

Hierdurch wird eine dezentrale Abrufbarkeit der Infrastrukturbauteil-Kennung-Kombination geschaffen. So können die Infrastrukturbauteil-Kennung-Kombinationen mehrerer Infrastrukturbauteile eines Bauprojekts oder verschiedener Bauprojekte gemeinsam geordnet registriert sein. Die Übersichtlichkeit wird damit verbessert.

Durch ein Auslesen der Infrastrukturbauteil-Kennung-Kombination eines bestimmten Infrastrukturbauteils und ein Abgleichen mit der in der Datenbank hinterlegten Infrastrukturbauteil-Kennung-Kombination ist es vorteilhaft möglich, Produktfälschungen zu erkennen und deren Verwendung zu vermeiden oder Produktrückrufaktionen erfolgreich und zeitnah durchzuführen. Gleiches gilt für gestohlene Produkte, die bei einer analogen Prüfung so als gestohlen sicher nicht erkannt werden können.

In einer weiteren vorteilhaften Ausführung des erfindungsgemäßen Verfahrens wird in einem Errichtungsschritt ein Infrastrukturbauwerk zumindest teilweise errichtet, wobei das Infrastrukturbauteil verbaut wird.

Hierdurch wird ein Infrastrukturbauwerk geschaffen, dessen Komponenten zumindest vereinzelt registriert sind und vor Ort wiederauffindbar sind.

In einer weiteren vorteilhaften Ausführung des erfindungsgemäßen Verfahrens wird ein Ergänzungsschritt durchgeführt, bei dem auf dem Transponder zumindest eine zusätzliche Information hinterlegt wird. Dabei wird insbesondere ein Datum hinterlegt, an welchem das Infrastrukturbauteil verbaut oder geprüft worden ist. Alternativ oder zusätzlich zum Datum kann eine Verörtlichung hinterlegt werden. Hierdurch steht die zusätzliche Information am Ort des Infrastrukturbauwerks bereit, was beispielsweise bei einer Wartung oder Prüfung des Infrastrukturbauwerks die Möglichkeit einer zusätzlichen Qualitätssicherung bietet.

In einer weiteren vorteilhaften Ausführung des erfindungsgemäßen Verfahrens wird nach dem Ergänzungsschritt zusätzlich ein Kontrollschritt durchgeführt, bei dem eine Ausführung des Infrastrukturbauwerks dadurch kontrolliert wird, dass die auf dem Transponder oder in der Datenbank hinterlegten Informationen abgerufen und mit Soll-Daten abgeglichen werden.

Hierdurch wird erstmalig eine As-Built-Kontrolle mit den vorgelagerten Produktions-, Materialfluss- und Logistikketten und den zugehörigen Daten (Tracking an Tracing) auf eine einfache Weise möglich. Das Computermodel (bspw. der digital vorgegebene Bauablauf; die digitale Bauanleitung) kann der tatsächlichen Ausführung leicht angepasst werden, so dass stets ein aktueller Datenbestand geführt wird. Zeitannahmen, Reifenfolge des Einbaus, die Qualität, der Budgetrahmen, das Bauverfahren passt bzw. passt nicht. Dadurch entstehen parallel verprobte Aufmaße (auch für quittiert übernommenes Material) und Bautagesberichte, in denen ein Anlagenverantwortlicher/ein Bauüberwacher/eine Aufsichtsbehörde/eine Aufsichtsstelle den konformen/nicht konformen Einbau (konforme Randbedingungen wie Temperatur, Feuchtigkeit, Spannungen) festhalten kann. Mögliche Nachtragsansprüche stehen in einem direkten digitalen Kontext und können verifiziert oder falsifiziert werden. Forderungen der Auftragnehmer können verworfen, Gegenforderungen eröffnet werden. Die digitale Bauakte wird dadurch automatisch fortgeschrieben. Dies ermöglicht eine proaktive Steuerung auf Ebene der Infrastrukturbauteile und bietet sich vor allem an, wenn mehr als ein Auftragnehmer direkt vertraglich gebunden ist. So sind bauzeitliche Abweichungen sehr früh Auftragnehmer scharf zu erkennen und die Ursachen sind eindeutig zu scheidbar. Es gibt eine gesicherte bauteilbezogene Nachweisführung für alle erdenklichen Fälle, die das Fundament zum "Koordinierten" Vertragsmodell 5D bildet. Sicherlich zählt dazu auch ein (Condition) Monitoring und ein Infrastrukturbauteilbezogenes predictive management. Zudem kann jedwedes verortete (bauteilspezifische) Gutachten/Dokument wiedergefunden werden.

In einer weiteren vorteilhaften Ausführung des erfindungsgemäßen Verfahrens werden die auf dem Transponder hinterlegten Informationen regelmäßig mittels eines Funknetzes abgerufen, insbesondere mittels eines stationären Funknetzes.

Dadurch kann der Kontrollschritt häufig und jederzeit durchgeführt werden. Abweichungen von den Soll-Daten werden dadurch schneller und automatisch ersichtlich.

Das erfindungsgemäße Infrastrukturbauteil umfasst zumindest einen Bauteilkörper und einen Transponder, der mit einer Kennung versehen oder versehbar ist.

Mit dem erfindungsgemäßen Infrastrukturbauteil ist es vorteilhaft ermöglicht, Infrastrukturbauteil-Kennung-Kombinationen der Infrastrukturbauteile eines Infrastrukturbauwerks in einem Computermodell (BIM) attributiert zu planen, es zu erzeugen und diese in einem Register anzulegen und bei Bedarf abrufbar bereitzustellen. Es bietet sich an, neben den klassischen Bauvorhaben Kennungen und Plan-Kennungen Infrastrukturbauteil-Kennungs-Kombinationen für die Planwelt als auch für die Realwelt anzulegen. Dies beinhaltet je nach Anwendungsfall sicherlich auch die Infrastrukturbauteilhistorie inklusive Hersteller und Materialzulieferer (ohne Anspruch auf Vollständigkeit: nebst herstellerbezogener Produktqualifikationen, Zertifikaten, Zeugnissen, Maßprüfungen, Schweißerlisten, Prüfprotokollen, Fertigungsüberwachungsberichten und Fertigungsüberwachungsbescheinigungen). Genauso ist das zum Zeitpunkt der Planung gültige Regelwerk (bspw. DIN; EC) und das zum Zeitpunkt der Ausführung gültige Regelwerk (bspw. DIN; EC) enthalten. Genauso wie weitere spezifische Anforderungen, die parallel bedient werden müssen (Transeuropäische Eisenbahn-Interoperabilitätsverordnung [TEIV] oder die technischen Spezifikationen für die Interoperabilität [TSI]). Die Regelwerke können unterschiedlich sein.

Das Infrastrukturbauteil dient somit als digital durchgängige Basis für ein ganzheitliches Infrastrukturplanungs-, Infrastrukturerstellungs- und Infrastrukturbetreiberverfahren. Die Infrastruktur beinhaltet unter anderem die technische Infrastruktur [v.a. Verkehrsinfrastruktur] und die soziale Infrastruktur [v.a. öffentliche Gebäude]. Analoge Systembrüche sind damit Geschichte. Die virtuelle Welt aus der Planung kann somit mit der realen Welt des Bauens und Betreibens verbunden werden.

In einer vorteilhaften Ausgestaltung des erfindungsgemäßen Infrastrukturbauteils ist der Transponder ein passiver Transponder.

Der Transponder arbeitet insbesondere allein mittels der durch die Sende-/Empfangseinheit bereitgestellten Energie und benötigt keine zusätzliche Energieversorgung. Die Funktionsfähigkeit des Transponders ist damit auf sehr lange Zeit sichergestellt.

In einer weiteren vorteilhaften Ausgestaltung des erfindungsgemäßen Infrastrukturbauteils ist der Transponder ein beschreibbarer Transponder.

Hiermit ist es ermöglicht, zumindest eine zusätzliche Information auf dem Transponder zu hinterlegen.

In einer weiteren vorteilhaften Ausgestaltung des erfindungsgemäßen Infrastrukturbauteils ist das Infrastrukturbauteil eine Schiene, eine Schwelle, eine Schottermenge, ein Gleis, ein Mast, oder ein Mauerteil. Das Infrastrukturbauteil kann auch eine Brücke, eine Signalanlage, ein Betonfertigteil beziehungsweise ein Betonhalbfertigteil sein.

Hiermit ist es ermöglicht, verschiedenste Infrastrukturprojekte, insbesondere im Eisenbahnbereich/Straßenbereich, mit dem erfindungsgemäßen Infrastrukturbauteil auszustatten.

Weitere Vorteile der vorliegenden Erfindung sind aus der detaillierten Beschreibung und den Abbildungen ersichtlich. Die Erfindung wird anhand der Abbildungen und der nachfolgenden Beschreibung näher erläutert. Es zeigen:
Fig. 1 ein erfindungsgemäßes Infrastrukturbauteil in einer beispielhaften Ausgestaltung; und
Fig. 2 ein erfindungsgemäßes Verfahren zum Bau von Infrastruktur.

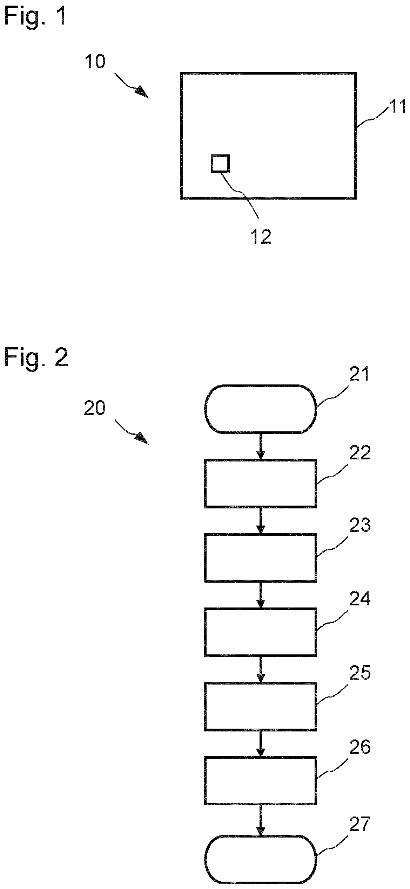

In der Fig. 1 ist das erfindungsgemäße Infrastrukturbauteil 10 in einer beispielhaften Ausgestaltung schematisch dargestellt. Das Infrastrukturbauteil 10 ist ausgebildet, ein Mitbestandteil eines Infrastrukturbauwerks, insbesondere einer technischen Infrastruktur, zu sein. Das Infrastrukturbauwerk, dessen Mitbestandteil das Infrastrukturbauteil 10 ist, ist insbesondere eine Eisenbahntrasse, eine Straßentrasse, ein Wasserweg, ein Leitungsnetz, eine Lagerhalle, ein Rohrsystem, ein Lärmschutzbauwerk, ein Gleis, eine Weiche oder eine Weichenkreuzung, eine Brücke, ein Tunnel, ein Durchlass, ein Erdkörper, ein Schotterbett, ein Stützbauwerk, ein Bahnübergang, eine Stromschiene, eine Oberleitung, ein Mast, ein Stellwerk, ein Kommunikationsnetz (auf Basis Funk und/oder Kabel) oder ein Teil davon.

Das Infrastrukturbauteil 10 umfasst einen einzigen oder mehrere Bauteilkörper 11 sowie erfindungsgemäß einen Transponder 12. Der Transponder 12 ist dabei entweder fest mit dem Bauteilkörper 11 verbunden, insbesondere dann, wenn das Infrastrukturbauteil 10 einen einzigen Bauteilkörper 11 aufweist, oder der Transponder 12 ist lose mit dem Bauteilkörper 11 verbunden, insbesondere dann, wenn das Infrastrukturbauteil 10 mehrere Bauteilkörper 11 aufweist. Ist der Transponder 12 fest mit dem Bauteilkörper 11 verbunden, dann in der Weise, dass der Transponder 12 auf einer Oberfläche des Bauteilkörpers 11 angebracht, beispielsweise geklebt, ist, oder der Transponder 12 ist von dem Bauteilkörper 11 zumindest teilweise umschlossen.

Der Transponder 12 ist, wie es üblich ist, eine Kommunikationseinheit, die ausgebildet ist, insbesondere per Radiowellen mit einer Sende-/Empfangseinheit kontaktlos zu kommunizieren. Bevorzugt ist der Transponder 12 passiver Bauart, wobei der Transponder 12 die zur Kommunikation notwendige Energie aus dem Feld der Sende-/Empfangseinheit bezieht. Insbesondere ist der Transponder 12 eine im Stand der Technik bekannte RFID-Einheit, wobei RFID für Radio Frequency Identification steht, oder mit gekoppelter Technik.

Auf dem Transponder 12 ist zumindest eine Kennung hinterlegt oder hinterlegbar, die mittels der Sende/Empfangseinheit abrufbar ist. Diese Kennung ist beispielsweise eine alphanummerische Syntax. Bevorzugt ist die Kennung nur ein einziges Mal vergeben. Insbesondere ist der Transponder 12 ausgebildet, zusätzlich zur Kennung zumindest eine weitere Information speichern zu können.

In der Fig. 2 ist das erfindungsgemäße Verfahren zur Handhabung eines Infrastrukturbauteils in einer beispielhaften Ausführung schematisch in einem Diagramm dargestellt. Das dargestellte Verfahren 20 umfasst von einem Start 21 bis zu einem Ende 27 beispielhaft mehrere Verfahrensschritte 22 bis 26, deren Abfolge von der dargestellten Abfolge abweichen kann.

Bei dem Verfahren 20 zur Handhabung eines Infrastrukturbauteils 10 wird in einem Zuordnungsschritt 22 dem Infrastrukturbauteil 10 ein mit einer Kennung versehener Transponder 12 zugeordnet. Der Zuordnungsschritt 22 erfolgt bevorzugt frühestmöglich in einer Planungsphase des Infrastrukturbauwerks, ist jedoch auch zu einem späteren Zeitpunkt noch möglich. Damit wird eine Infrastrukturbauteil-Kennung-Kombination erzeugt, mit der dem Infrastrukturbauteil 10 eineindeutig die Kennung zugeordnet wird. Der Zuordnungsschritt 22 umfasst neben der Erzeugung der Infrastrukturbauteil-Kennung-Kombination insbesondere auch ein physisches Zuordnen des Transponders 12 und des Bauteilkörpers 11. Das physische Zuordnen kann durch Fügen oder Beimengen erfolgen. Weist das Infrastrukturbauteil 10 einen einzigen Bauteilkörper 11 auf, wird bevorzugt gefügt, beispielsweise durch Kleben. Weist das Infrastrukturbauteil 10 mehrere Bauteilkörper 11 auf, wird bevorzugt beigemengt.

Zeitlich vor oder bevorzugt nach dem physischen Zuordnen wird bei dem Verfahren 20 bevorzugt ein Hinterlegungsschritt 23 durchgeführt, bei dem die Infrastrukturbauteil-Kennung-Kombination in wenigstens einer Datenbank hinterlegt wird. Die Hinterlegung erfolgt insbesondere in eine Cloud und ist abrufbar. Bevorzugt wird die Infrastrukturbauteil-Kennung-Kombination in der Datenbank mit zumindest einer zugeordneten Information verknüpft. Die zugeordnete Information ist beispielsweise eine Prozessinformation, insbesondere eine, die die Frage nach dem Wer, dem Wie, dem Was, dem Welche, dem Wo, und/oder dem Warum betrifft.

So kann die zugeordnete Information Verantwortlichkeiten, einen Planer der einzelnen (Teil-) Phasen des Bauwerks, einen Ersteller des Infrastrukturbauteils, einen Verkäufer des Infrastrukturbauteils, einen Logistiker des Infrastrukturbauteils, einen Vollständigkeitsprüfer, einen Wareneingangprüfer, einen Qualitätskontrolleur, einen Werksabnehmer, einen Güteprüfer, einen VOB-Abnehmenden, einen BGB-Abnehmenden, einen Inbetriebnahmeverantwortlichen, einen Instandhalter, einen Anlagenverantwortlichen, einen Inspekteur, einen Fachbeauftragten, einen Einkäufer des Infrastrukturbauteils, einen Anlagenverantwortlichen, einen Fachbeauftragten, einen Bauwerksprüfer nach DIN 1076, einen Betreiber, einen Projektleiter, oder auch einen Projekteinkäufer betreffen.

Die zugeordnete Information kann ferner einen Transportweg, eine Dokumentation einen Wiegeschein, ein Gutachten, ein Bericht, oder auch einen Befund betreffen.

Die zugeordnete Information kann ferner eine zu einer Teileart (Fertigteil, Halbfertigteil), einer Endmontage, einer Korrosionswiderstandsklasse, einer Werkstoffnummer, einer CE-Kennzeichnung, einer Europäischen Technischen Zulassung (ETA), einer Zulassung und Konformität nach Bauproduktennorm, einer Inspektionsvorgabe, einem Untersuchungsdatum, einem Überwachungsdatum, einem Begutachtungsdatum, einem Sonderinspektionsdatum, einem Grundwasserstand, einem Erdbebengebiet, einem Bergsenkungsgebiet, einer Anerkennung als Prüf-, Überwachungs- und Zertifizierungsstelle nach den Landesbauordnungen der Länder für Zulassungen des Bereichs 21 des DIBt, oder auch einer Anerkennung nach Bauproduktengesetz mindestens für die Bereiche ETAG 001, Teile 1 bis 3 sein.

Die zugeordnete Information kann ferner eine Farbe (bspw. RAL-Nr), eine Materialnummer, einen Preis, ein Beschichtungsverfahren, ein Produktionswerk, ein Produktionsdatum, eine Produktionsuhrzeit, ein Produktionsort, einen Teilbaubaustoff, einen Zulieferer des Teilbaustoffs, ein Bauprodukt, eine Materialeigenschaft, eine Werkstoffzusammensetzung, eine Ortschaft, ein Regelwerk (DIN), EC), eine Abmessung, ein Gewicht, eine Menge, eine Anzahl, eine Temperatur, eine Luftfeuchtigkeit, oder auch ein Beschichtungsverfahren betreffen.

Die zugeordnete Information kann ferner ein Baurecht (der Staaten, Bundesländer, Gemeinden, Kommunen), ein Status (EU / Non-EU), eine Reiseroute vom Werk zum Lagerplatz zum Einbauort (GPS-Streckenkennung), einen Lagerplatz, einen Zwischenlagerplatz, eine Bauwerksinformation, oder auch eine Zwischenlagerdauer betreffen.

Die zugeordnete Information ist insbesondere eine mitgeltende Unterlage, wie beispielsweise eine Abfallbilanz, ein Abfallmanagement, eine Abnahmeunterlage, ein Abnahmeprüfzeugnis, eine anerkannte Regel der Technik, ein Anfahrschaden, eine Anlagenbeschreibung, eine Anwendererklärung, eine Auflistung vorhandener/ beseitigter Mängel inkl. (spätestem) Beseitigungstermin, eine Auflistung vorhandener/ beseitigter Schäden mit Unterscheidung nach Schäden mit und ohne Sicherheitsrisiko inkl. (spätestem) Beseitigungstermin, ein Aufmassblatt, eine Ausführungsunterlage, eine Ausnahmegenehmigung, ein Bauablaufplan, eine Bauakte, eine Bauerlaubnis, eine Baugrunderkundung, ein Baugrundgutachten, ein Bautagebuch, ein Bautagesbericht (AG und AN), ein Bauteilbild, eine Bauwerksakte, ein Bauwerksbuch, ein Bauwerksheft, eine Bauwerksnummer, ein Bauwerksverzeichnis, eine Bedienungsanleitungen, ein Befund, eine Berechnung für den Nachweis der Sicherheit der Funktionsfähigkeit (Objektstatik), ein Bescheid über anlagenbezogene oder personenbezogene Befugnisse, eine Bescheinigung zum Nachweis der Eignung für Schweißarbeiten an Schienenwerkstoffen/Oberbaumaterial als Schweißwerk nach einer bestimmten Richtlinie, eine Besichtigungseinrichtung, ein Bestandsplan, eine Betretungserlaubnis, eine Betriebssicherheitsbeurteilung, eine Beweissicherung, eine Bodenuntersuchung, ein Bodenschutzgutachten, ein Bodenverwertungs- und Entsorgungskonzept (BoVEK), ein Brandschutzgutachten, eine Brückenakte, ein Buchbauwerksbefund, eine Bürgschaft, eine CO2-Bilanz von Infrastrukturbauteilen, eine CO2-Information (Menge bei der Entsorgung, in der Produktion, beim Transport), ein Datenblatt, ein Denkmalschutzgutachten, eine Norm mit Gültigkeitsbezug, ein Dokumentationsblatt (für sonstige Ingenieurbauwerke, für Schallschutzwände, für Schleuderbetonmaste, Stahlmaste), ein Zertifizierungsprozess, eine Eigenüberwachung, eine Eingruppierung sonstiger Ingenieurbauwerke mit Bewertungsziffer, eine Eisenbahnkreuzungsvereinbarung, ein Emissionsschutzgutachten, ein endrevidierter Bestandsplan, eine Engstelle, eine Entwurfsplanung, ein Entstörhinweis, eine Produktionskontrolle (WPK), ein Erschütterungsmessergebnis, ein Erschütterungsschutzgutachten, eine Erzeugnis Nummer, eine Festlegung aus Planfeststellungsbeschlüssen (PFV-Beschluss), ein Festpunktnachweis, eine Fertigstellungsmeldung, ein Fertigungsüberwachungsbericht, eine Fotoaufnahme von den wesentlichen Bauwerksteilen, eine Fremdüberwachung, ein Fristenblatt zu Mängelansprüchen, ein Fristenkalender, ein geotechnischer Bericht, ein Geotechnikgutachten, ein geprüftes Abnahmeprüfzeugnis, ein Gestattungsvertrag, ein Gewährleistungsmangel, ein Gewährleistungsschaden, ein Gewässergutachten, eine Grunddienstbarkeit, ein Grundriss, ein Grundwassergutachten, eine Güteanforderung, ein Güteprüfprotokoll, ein handrevidierter Bestandsplan, ein Heftbauwerksbefund, eine herstellerbezogene Produktqualifikation, ein Herstellerzeichen, ein Herstellerzertifikat, ein Immissionsschutzgutachten, eine Inbetriebnahmegenehmigung, ein Inbetriebnahme-Sachverhalt, eine Inspektionsliste, eine Inspektionsvorgabe, ein Inspektionszertifikat, eine Kampfmitteldetektierung, ein kaufmännischer Vergabeprozess, ein Kaufvertrag, ein Kerbschlagbiegeversuch, eine Kernbohrung, eine Konformitätskennzeichnung, eine Konformitätsbescheinigung, ein Konformitätsnachweise, eine Kontrollmessung, ein Korrosionsschutzprotokoll, ein Bauwerklängsschnitt, eine Information mit Lage und Höhe der baulichen Anlagen, ein Lageplan mit Nordpfeil, eine lagerhaltende Stelle, eine Bauordnung, eine Leistungserklärung, eine Leitungsänderungsvereinbarung, ein Lichtraumnachweis, eine Massenberechnung, ein Maßprotokoll, eine Maßprüfung, ein Messungsprotokoll, ein Mietvertrag, eine Montagedokumentation, eine Nachrechnungsunterlage, ein Nachweis der Qualifikation von Personal oder Prüfeinrichtungen, ein Nachweis des Qualitätsmanagementsystems, ein Nachweisbuch, ein notariell beurkundeter Vertrag, eine öffentlich-rechtliche Verpflichtung, eine öffentlich-rechtliche Zulassungsentscheidung, eine Planungsunterlage, ein Planfeststellungsbeschluss, eine Plangenehmigung, ein Präqualifikationsnachweis, eine Produktliste "Güteprüfpflichtige Produkte Oberbaumaterial", ein Protokoll zu Setzungen, Kippungen, Unterspülungen, Auskolkungen, Ausbrüchen, Pressungen, Fugen (Dichtigkeit und Versatz), ein Protokoll zur Wirksamkeit der Abdichtung, ein Protokoll zu Rissen mittels Gipsbänder und Rissmonitoren, ein Protokoll Ultraschweißprüfung, ein Prüfbericht zum Zugversuch, ein Prüfbericht für Werkstoffe, ein Prüfprotokoll zur Magnetpulverprüfung, ein Prüfprotokoll zur Sichtprüfung, eine Prüfzangennummer Leit- und Sicherungstechnik, eine Qualitätsprüfung, eine Qualifikation durch Laufbahnausbildung, ein Bauwerksquerschnitt, ein Raumordnungsverfahren, eine Regelinspektionsfrist, ein Regelwerke, ein Revisionsunterlage, eine Rissprüfung, eine Rostfahne, ein Sachverständigenstempel, ein Sammelbefund, eine Schadensliste, ein Schallschutzgutachten, eine Schlussrechnungen, eine Schmelzen Analyse, eine Schmelzen-Nummer, ein Schriftstück mit Urkundencharakter, eine Schutzvorkehrungen/ Schutzauflagen, eine Schweißerliste, ein Schweißer-Zertifikat, ein Sicherheitsdatenblatt, eine Skizze, eine Sonderinspektionsregel, ein Sonderinspektionsergebnis, eine Stahlsorte, eine Standsicherheitsberechnung, eine Statik, eine Stückliste, ein Stundenlohnzettel, eine technische Mitteilung, ein technischer Platz, eine Tragsicherheitsuntersuchung, eine Umstempelbescheinigung, ein Umweltschutzgutachten, ein umwelttechnischer Bericht, eine Unfallverhütungsbestimmung, eine unternehmensinterne Genehmigung (UiG), eine Untersuchungsfrist, eine Vereinbarung mit Dritten, eine Verkehrssicherheitsbeurteilung, ein Verschraubungsprotokoll, eine Rechtsbeziehung, ein Verzeichnis der Feldbezeichnungen, eine Wartungsanleitung, eine wasserrechtliche Genehmigung, ein zerstörungsfreies Prüfungsprotokolle (ZfP), eine zerstörungsfreie Schweißnahtprüfung am Einbauort, eine zivilrechtlichen Verpflichtung, ein Zugversuch, eine Zulassung als Schweißwerk, eine Zulassung im Einzelfall (ZiE), ein Zulassungsbescheid, ein Zulassungszertifikat für Schweißzusätze und Schweißhilfsstoffe, ein Zustand der Schweißnähte, ein Zustand der Verbindungsmittel, eine Zustandsentwicklung, eine Zustandskategorie oder auch ein Zwangspunkt.

Zeitlich vor oder bevorzugt nach dem Hinterlegungsschritt 23 wird bei dem Verfahren 20 insbesondere ein Errichtungsschritt 24 durchgeführt. Bei dem Errichtungsschritt 24 wird das Infrastrukturbauteil 10 bei einer zumindest teilweisen Errichtung eines Infrastrukturbauwerks verbaut. In dem Errichtungsschritt 24 wird insbesondere eine Eisenbahntrasse, eine Straßentrasse, ein Wasserweg, ein Leitungsnetz, eine Lagerhalle, ein Rohrsystem, ein Lärmschutzbauwerk, ein Gleis, eine Weiche oder eine Weichenkreuzung, eine Brücke, ein Tunnel, ein Durchlass, ein Erdkörper, ein Schotterbett, ein Stützbauwerk, ein Bahnübergang, eine Stromschiene, eine Oberleitung, ein Mast, ein Stellwerk, ein Kommunikationsnetz (auf Basis Funk und/oder Kabel) oder eine Brücke errichtet.

Zeitlich nach oder während des Errichtungsschritts 24 wird insbesondere ein Ergänzungsschritt 25 durchgeführt. Bei dem Ergänzungsschritt 25 wird der Transponder 12 mittels der Sende-/Empfangseinheit mit einer zusätzlichen Information versehen. Auch diese zusätzliche Information ist, wie die Kennung, abrufbar. Die zusätzliche Information ist insbesondere ein Datum und/oder eine Verörtlichung und/oder eine zweite Kennung. Das Datum kann dabei das Datum des Errichtungsschritts 25 sein oder das Datum einer Überprüfung, bei der eine technische Eigenschaft des Infrastrukturbauteils 10 festgestellt wurde. Die Verörtlichung kann eine Lageinformation des verbauten Infrastrukturbauteils 10 sein. Die zweite Kennung kann beispielsweise ein Code für eine bestimmte Beschaffenheit des Infrastrukturbauteils 10 sein.

Zeitlich nach dem Ergänzungsschritt 25 wird insbesondere ein Kontrollschritt 26 durchgeführt. Bei dem Kontrollschritt 26 wird beispielsweise eine As-Built-Kontrolle durchgeführt, bei der die tatsächliche Ausführung des Infrastrukturbauwerks mit einem Computermodell (BIM) abgeglichen wird. Bei dem Kontrollschritt 26 werden die auf dem Transponder 12 oder die in der Datenbank hinterlegten Informationen, insbesondere auch die zugeordneten Informationen, abgerufen und mit Soll-Daten abgeglichen. Das Abrufen der auf dem Transponder 12 hinterlegten Informationen geschieht dabei bevorzugt regelmäßig und insbesondere mittels eines stationären Funknetzes. Die Verwendung eines stationären Funknetzes erlaubt die Abfrage jederzeit durchzuführen.

Das erfindungsgemäße Verfahren 20 kann das Infrastrukturbauteil 10 über dessen gesamten Lebenszyklus begleiten, angefangen in der Planungsphase des Infrastrukturbauwerks bis zu einem Rückbau und Nachweisführung für die Abfallwirtschaft als sogenannte Mengenbilanz des Infrastrukturbauwerks mit anschließendem Recycling.

### Bezugszeichenliste:

- 10: Infrastrukturbauteil
- 11: Bauteilkörper
- 12: Transponder

- 20: Verfahren zur Handhabung von Infrastrukturbauteilen
- 21: Start
- 22: Zuordnungsschritt
- 23: Hinterlegungsschritt
- 24: Errichtungsschritt
- 25: Ergänzungsschritt
- 26: Kontrollschritt
- 27: Ende

## Patentansprüche

1. Verfahren (20) zur Handhabung eines Infrastrukturbauteils (10), **dadurch gekennzeichnet, dass** in einem Zuordnungsschritt (22) dem Infrastrukturbauteil (10) ein mit einer Kennung versehener Transponder (12) zugeordnet und damit eine Infrastrukturbauteil-Kennung-Kombination erzeugt wird.

2. Verfahren (20) zur Handhabung eines Infrastrukturbauteils (10) nach Patentanspruch 1, **dadurch gekennzeichnet, dass** die Infrastrukturbauteil-Kennung-Kombination in einer Datenbank hinterlegt wird.

3. Verfahren (20) zur Handhabung eines Infrastrukturbauteils (10) nach Patentanspruch 2, **dadurch gekennzeichnet, dass** die Infrastrukturbauteil-Kennung-Kombination in der Datenbank mit zumindest einer zugeordneten Information verknüpft wird.

4. Verfahren (20) zur Handhabung eines Infrastrukturbauteils (10) nach einem der Patentansprüche 1 bis 3, **dadurch gekennzeichnet, dass** in einem Errichtungsschritt (24) ein Infrastrukturbauwerk zumindest teilweise errichtet wird, wobei das Infrastrukturbauteil (10) verbaut wird.

5. Verfahren (20) zur Handhabung eines Infrastrukturbauteils (10) nach Patentanspruch 4, **dadurch gekennzeichnet, dass** nach dem Errichtungsschritt (24) ein Ergänzungsschritt (25) durchgeführt wird, bei dem auf dem Transponder (12) zumindest eine zusätzliche Information hinterlegt wird.

6. Verfahren (20) zur Handhabung eines Infrastrukturbauteils (10) nach Patentanspruch 5, **dadurch gekennzeichnet, dass** die zusätzliche Information ein Datum ist, an welchem das Infrastrukturbauteil (10) verbaut oder geprüft worden ist.

7. Verfahren (20) zur Handhabung eines Infrastrukturbauteils (10) nach Patentanspruch 5 oder 6, **dadurch gekennzeichnet, dass** nach dem Ergänzungsschritt (25) zusätzlich ein Kontrollschritt (26) durchgeführt wird, bei dem eine Ausführung des Infrastrukturbauwerks dadurch kontrolliert wird, dass die auf dem Transponder (12) oder in der Datenbank hinterlegten Informationen abgerufen und mit Soll-Daten abgeglichen werden.

8. Verfahren (20) zur Handhabung eines Infrastrukturbauteils (10) nach Patentanspruch 7, **dadurch gekennzeichnet, dass** die auf dem Transponder (12) hinterlegten Informationen regelmäßig mittels eines Funknetzes abgerufen werden.

9. Infrastrukturbauteil (10), aufweisend einen Bauteilkörper (11), **dadurch gekennzeichnet, dass** das Infrastrukturbauteil (10) einen Transponder (12) umfasst, der mit einer Kennung versehen oder versehbar ist.

10. Infrastrukturbauteil (10) nach Patentanspruch 9, **dadurch gekennzeichnet, dass** der Transponder (12) ein passiver Transponder (12) ist.

11. Infrastrukturbauteil (10) nach einem der Patentansprüche 9 oder 10, **dadurch gekennzeichnet, dass** der Transponder (12) ein beschreibbarer Transponder ist.

12. Infrastrukturbauteil (10) nach einem der Patentansprüche 9 bis 11, **dadurch gekennzeichnet, dass** das Infrastrukturbauteil (10) eine Schiene, eine Schwelle, eine Schottermenge, ein Gleis, ein Mast, oder ein Mauerteil ist.
